Europäisches Patentamt

European Patent Office

Office européen des brevets

(19)

(11) Veröffentlichungsnummer : **0 413 888 B1**

# (12) EUROPÄISCHE PATENTSCHRIFT

(45) Veröffentlichungstag der Patentschrift :
23.09.92 Patentblatt 92/39

(51) Int. Cl.⁵ : **B60Q 3/04,** G02F 1/1333,
F21V 17/00

(21) Anmeldenummer : **90102214.5**

(22) Anmeldetag : **05.02.90**

(54) **Anzeigeeinrichtung.**

(30) Priorität : **22.07.89 DE 3924305**

(43) Veröffentlichungstag der Anmeldung :
**27.02.91 Patentblatt 91/09**

(45) Bekanntmachung des Hinweises auf die
Patenterteilung :
**23.09.92 Patentblatt 92/39**

(84) Benannte Vertragsstaaten :
**DE ES FR GB**

(56) Entgegenhaltungen :
**DE-A- 3 314 693**

(56) Entgegenhaltungen :
**DE-A- 3 325 773**
**DE-U- 8 219 666**
**FR-A- 2 057 852**
**US-A- 4 587 754**

(73) Patentinhaber : **VDO Adolf Schindling AG**
**Gräfstrasse 103**
**W-6000 Frankfurt/Main 90 (DE)**

(72) Erfinder : **Salzmann, Timm**
**Wiesenstrasse 11**
**W-6117 Schaafheim (DE)**

(74) Vertreter : **Klein, Thomas, Dipl.-Ing. (FH)**
**Sodener Strasse 9 Postfach 6140**
**W-6231 Schwalbach a. Ts. (DE)**

EP 0 413 888 B1

## Beschreibung

Die Erfindung betrifft eine Anzeigeeinrichtung mit einem Lichtkasten, welcher von einer Anzeigeplatte, insbesondere einer Flüssigkristallzelle, abgedeckt ist und bei der im Lichtkasten hinter der Anzeigeplatte eine transparente Lichtscheibe angeordnet ist. Solche Anzeigeeinrichtungen nach dem Oberbegriff des Anspruchs 1 sind in heutigen Kraftfahrzeugen vorgesehen und allgemein bekannt, zum Beispiel aus der Schrift DE-U-8219666.

Die Lichtscheibe hinter der Anzeigeplatte kann als Streuscheibe zur gleichmäßigen Ausleuchtung oder als Farbscheibe für die farbliche Beleuchtung der Anzeigeplatte ausgebildet sein. Oftmals ordnet man auch sowohl eine Steuerscheibe als auch eine Farbscheibe hinter der Anzeigeplatte an. Um bei allen Drehzahlbereichen des Kraftfahrzeugs Klappergeräusche der Lichtscheibe auszuschliessen, hat man diese bislang mit dem Lichtkasten ultraschallverschweißt. Das löst zwar das Klapperproblem zuverlässig, stellt jedoch einen sehr aufwendigen Arbeitsgang dar.

Der Erfindung liegt die Aufgabe zugrunde, eine Anzeigeeinrichtung der eingangs genannten Art so auszubilden, daß mit möglichst geringem Aufwand ein Klappern der Lichtscheibe ausgeschlossen ist.

Diese Aufgabe wird erfindungsgemäß auf überraschend einfache Weise dadurch gelöst, daß die Lichtscheibe unter Bildung einer Wölbung mit Vorspannung lösbar in den Lichtkasten eingesetzt ist.

Durch diese Gestaltung kann auf das Verschweißen der Lichtscheibe verzichtet werden. Dadurch vereinfacht sich die Herstellung der Anzeigeeinrichtung erheblich. Da die Lichtscheibe lösbar in den Lichtkasten eingesetzt ist, kann sie bei nicht ordnungsgemäßem Lichtkasten demontiert und wiederverwendet werden.

Die Herstellungstoleranzen für den Lichtkasten und die Lichtscheibe können besonders gering sein, wenn die Lichtscheibe mit ihren gegenüberliegenden Schmalseiten gegen die entsprechenden Seitenwände des Lichtkastens abgestützt ist und von Schmalseite zu Schmalseite gewölbt verläuft.

Besonders fest und klapperfrei ist die Lichtscheibe im Lichtkasten gehalten, wenn gemäß einer anderen Ausgestaltung der Erfindung die Wölbung der Lichtscheibe zur Anzeigeplatte hin gerichtet ist und die Lichtscheibe mit einem mittleren Bereich mit Vorspannung gegen die Anzeigeplatte anliegt.

Der Fertigungsaufwand für die Anzeigeeinrichtung ist ganz besonders gering, wenn die Lichtscheibe an ihren Schmalseiten jeweils mindestens einen Vorsprung und der Lichtkasten in seinen Seitenwänden jeweils einen entsprechenden Schlitz aufweist.

Die Erfindung läßt zahlreiche Ausführungsformen zu. Zur weiteren Verdeutlichung ihres Grundprinzips ist eine davon in der Zeichnung dargestellt und wird nachfolgend beschrieben. In ihr zeigen die

Fig. 1 eine Lichtscheibe der Anzeigeeinrichtung nach der Erfindung,

Fig. 2 eine perspektivische Darstellung eines Lichtkastens ohne die Lichtscheibe,

Fig. 3 eine perspektivische Darstellung des Lichtkastens mit der Lichtscheibe.

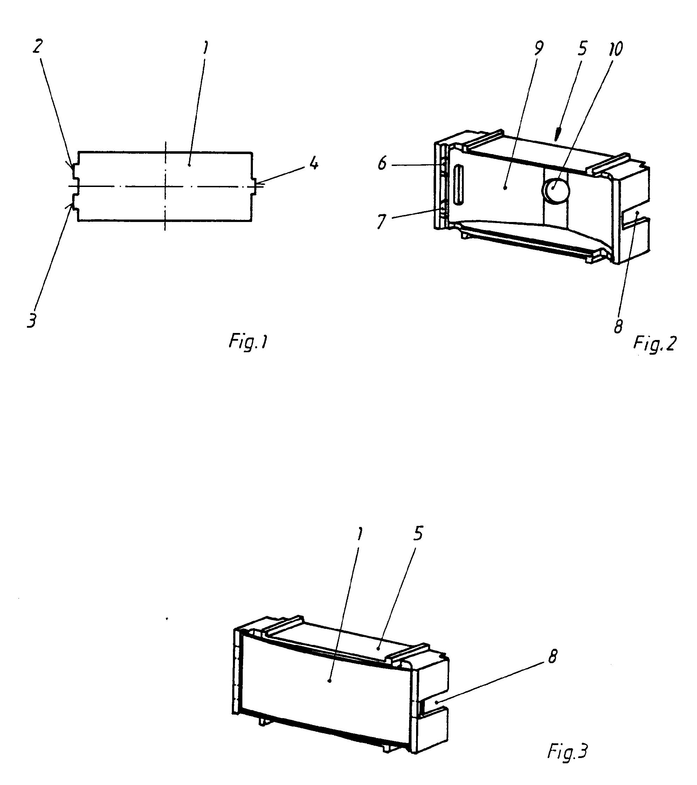

Die Figur 1 zeigt eine Lichtscheibe 1, welche an ihrer linken Schmalseite zwei Vorsprünge 2, 3 und an ihrer rechten Schmalseite einen Vorsprung 4 hat.

Die Figur 2 zeigt einen Lichtkasten 5, in dessen linker Seitenwand zwei den Vorsprüngen 2 und 3 entsprechende Schlitze 6, 7 vorgesehen sind. In der in Figur 2 gesehen rechten Seitenwand hat der Lichtkasten 5 einen Schlitz 8, der von hinten her in die Seitenwand bis nahe zu seiner Vorderseite führt. Die Figur 2 läßt weiterhin erkennen, daß die Rückseite des Lichtkastens 5 durch eine konkav gewölbte Reflektionsfläche 9 gebildet ist, die einen mittigen Durchbruch 10 hat, durch den eine nicht gezeigte Lichtquelle in den Lichtkasten 5 zu ragen vermag.

Die Lichtscheibe 1 wird mit ihren Vorsprüngen 2, 3 in die Schlitze 6, 7 und mit ihrem Vorsprung 4 in den Schlitz 8 eingesetzt. Sie ist etwas länger als der lichte Abstand der Seitenwände des Lichtkastens 5. Dadurch wölbt sie sich im montierten Zustand etwas nach außen, was in der Figur 3 zu sehen ist.


## Patentansprüche

1. Anzeigeeinrichtung mit einem Lichtkasten (5), welcher von einer Anzeigeplatte, insbesondere einer Flüssigkristallzelle, abgedeckt ist und bei der im Lichtkasten hinter der Anzeigeplatte eine transparente Lichtscheibe (1) angeordnet ist, dadurch gekennzeichnet, daß die Lichtscheibe (1) unter Bildung einer Wölbung mit Vorspannung lösbar in den Lichtkasten (5) eingesetzt ist.

2. Anzeigeeinrichtung nach Anspruch 1, dadurch gekennzeichnet, daß die Lichtscheibe (1) mit ihren gegenüberliegenden Schmalseiten gegen die entsprechenden Seitenwände des Lichtkastens (5) abgestützt ist und von Schmalseite zu Schmalseite gewölbt verläuft.

3. Anzeigeeinrichtung nach den Ansprüchen 1 oder 2, <u>dadurch gekennzeichnet</u>, daß die Wölbung der Lichtscheibe (1) zur Anzeigeplatte hin gerichtet ist und die Lichtscheibe (1) mit einem mittleren Bereich mit Vorspannung gegen die Anzeigeplatte anliegt.

4. Anzeigeeinrichtung nach zumindest einem der vorangehenden Ansprüchen, <u>dadurch gekennzeichnet</u>, daß die Lichtscheibe (1) an ihren Schmalseiten jeweils zumindest einen Vorsprung (2, 3, 4) und der Lichtkasten (5) in seinen Seitenwänden jeweils einen entsprechenden Schlitz (6, 7, 8) aufweist.

## Claims

1. Display device comprising a lighting shell (5) which is covered by a display panel, more particularly a liquid crystal cell, and with a transparent lens (1) disposed in the lighting shell to the rear of the display panel, characterised by pretensioning the lens (1) so as to bow it before inserting it detachably into the lighting shell (5).

2. Display device according to claim 1, characterised in that the lens (1) rests with its opposing narrow sides against the corresponding side walls of the lighting shell (5) and bows out from one narrow side to the other.

3. Display device according to claims 1 or 2, characterised in that the lens (1) bows in the direction of the display panel and the lens (1) rests pretensioned against the display panel by a central area.

4. Display device according to at least one of the preceding claims, characterised in that the lens (1) has at least one projection (2, 3, 4) on each of its narrow sides and the lighting shell (5) has a corresponding slot (6, 7, 8) in each of its side walls.

## Revendications

1. Dispositif de visualisation comportant une boîte à lumière (5), qui est recouverte d'une plaque indicatrice, notamment une cellule à cristaux liquides, et dans lequel une plaque formant un filtre (1) transparent est disposée dans cette boîte à lumière, derrière cette plaque indicatrice, dispositif caractérisé en ce que le filtre (1) est inséré amoviblement dans la boîte à lumière (5), sous une précontrainte élastique qui le fait se cintrer.

2. Dispositif de visualisation selon la revendication 1, caractérisé en ce que le filtre (1) est appliqué par ses petits côtés opposés contre les parois latérales correspondantes de la boîte à lumière (5) et est cintré d'un petit côté à l'autre.

3. Dispositif de visualisation selon la revendication 1 ou 2, caractérisé en ce que le cintrage du filtre (1) est orienté vers la plaque indicatrice et la partie centrale de ce filtre (1) est appliquée sous une précontrainte élastique contre cette plaque indicatrice.

4. Dispositif de visualisation selon l'une au moins des revendications précédentes, caractérisé en ce que le filtre (1) comporte sur chacun de ses petits côtés au moins une patte saillante (2 , 3 , 4) et la boîte à lumière (5) comporte dans chacune de ses parois latérales une fente ou encoche (6, 7; 8) correspondante.

Fig.1

Fig.2

Fig.3